# EUROPEAN PATENT APPLICATION

(11) **EP 2 644 494 A1**
(43) Date of publication of application: **02.10.2013**
(21) Application number: 11842909.1
(22) Date of filing: 18.11.2011
(51) Int. Cl.: B62M 7/12, B62H 1/02, B62J 25/00, B62J 31/00, B62M 11/02

(54) **POWER UNIT FOR SADDLED ELECTRIC VEHICLE, AND SADDLED ELECTRIC VEHICLE**

(30) Priority: 22.11.2010 JP 2010260634
(71) Applicant: Yamaha Hatsudoki Kabushiki Kaisha, Iwata-shi, Shizuoka 438-8501 (JP)
(72) Inventor: ORIMO Toshiro, Iwata-shi Shizuoka 438-8501 (JP); MORIYAMA Shuuji, Iwata-shi Shizuoka 438-8501 (JP); MANO Yasunori, Iwata-shi Shizuoka 438-8501 (JP); YOSHIDA Ryo, Iwata-shi Shizuoka 438-8501 (JP); YAMAUCHI Hirotoshi, Iwata-shi Shizuoka 438-8501 (JP)
(74) Representative: Grünecker, Kinkeldey, Stockmair & Schwanhäusser
(86) International application number: PCT/JP2011/076670
(87) International publication number: WO 2012/070491

(57) **Abstract**

A power unit for a straddle-type electric vehicle has an electric motor having output shaft, a transmission mechanism, a controller which controls the electric motor and a case which accommodating them having a support portion which is supported so as to swing relative to a vehicle body. The case includes a wall portion which extends in a front-and-rear direction, the support portion is formed so as to be provided on one side surface of a right side surface or a left side surface of one side of front-and-rear direction of the wall portion. The transmission mechanism is provided so that the axle shaft is provided on one side surface of the right side surface or the left side surface of the other side of the front-and-rear direction of the wall portion. The controller is fixed on a position which is the other side surface of the right side surface or the left side surface of the wall portion and which is the same position as at least part of the support portion in the front-and-rear direction. The electric motor is provided so that the output shaft is provided between the controller and the axle shaft in the front-to-right direction of the wall portion.

## Description

### Technical Field

The present invention relates to a power unit for a straddle-type electric vehicle and a straddle-type electric vehicle.

### Description of the Related Art

In recent years, there have been developed straddle-type electric vehicles such as electric motorcycles using an electric motor as a power source.
In these straddle-type electric vehicles, a power unit including an electric motor is supported on a vehicle body so as to swing relative thereto. This power unit includes a controller for controlling the supply of electric power to the electric motor. This controller is provided so as to face a side of a rear wheel. Thus, the controller is cooled effectively (for example, refer to Patent Document 1).
Patent Document 1: Japanese Patent Unexamined Publication JP-A-2004-352208

### Disclosure of the Invention

### Problem that the Invention is to Solve

In the power unit described above, since the controller is caused to face the side of the rear wheel, the controller is provided near an axle shaft of the rear wheel. Because of this, the electric motor is provided further rearwards towards the rear of the vehicle than the axle shaft of the rear wheel. Then, the electric motor, which is a heavy part, is provided in a position which is far away from a pivot on which the power unit is supported on the vehicle body so as to swing relative thereto. As a result, the inertia moment of the power unit relative to the vibration of the vehicle is increased. This decreases the following capability of the power unit relative to the vibration of the vehicle body, and deteriorates the riding comfort of the vehicle.

To deal with this, an object of the invention is to provide a power unit for a straddle-type electric vehicle that is superior in cooling a controller and which attains a good riding comfort when it is incorporated in such a straddle-type electric vehicle and a straddle-type electric vehicle which includes the power unit.

### Means for Solving the Problem

With a view to attaining the problem, there is provided a power unit for a straddle-type electric vehicle having:
an electric motor to which receives supply of electric power and which drives to rotate an output shaft;
a transmission mechanism which transmits rotational force of the output shaft of the electric motor to an axle shaft;
a controller which controls the supply of electric power to the electric motor; and
a case which accommodates the electric motor, the transmission mechanism and the controller and has a support portion which is supported so as to swing relative to a vehicle body,
wherein the case includes
   a wall portion which extends in a front-and-rear direction,
   the support portion is formed so as to be provided on one side surface of a right side surface or a left side surface of one side of front-and-rear direction of the wall portion,
the transmission mechanism is provided so that the axle shaft is provided on the one side surface of the right side surface or the left side surface of the other side of the front-and-rear direction of the wall portion,
the controller is fixed on a position which is the other side surface of the right side surface or the left side surface of the wall portion and which is the same position as at least part of the support portion in the front-and-rear direction
the electric motor is provided so that the output shaft is provided between the controller and the axle shaft in the front-to-right direction of the wall portion.

According to an aspect of the invention, heat generated in the controller can be released to the support portion having large heat capacity via the wall portion. Accordingly, the cooling capability of the controller can be enhanced. Further, the output shaft of the electric motor, which is a heavy part, is provided between the controller and the axle shaft. Accordingly, the electric motor can be positioned on the side lying close to the support portion which is the center of swing, and the inertia moment of the power unit is reduced which is generated when the vehicle vibrates. Consequently, the following capability to the vibration generated when the vehicle is running is enhanced, thereby making it possible to enhance the riding comfort. Namely, both the cooling capability of the controller and the riding comfort can be enhanced.

According to the power unit for the straddle-type electric vehicle of the present invention, the electric motor may include a stator and a rotor which oppositely faces the stator, and
the stator may be fixed on the other side surface of the right side surface or the left side surface and rear-side of the controller in the front-and-rear direction.

According to the invention, the heat generated in the stator can be radiated through the wall portion.

According to the power unit for the straddle-type electric vehicle of the present invention, the stator may be fixed to the other of the right side or the left side of the wall portion within an area which is situated in the same position as that of a wheel which is mounted on the axle shaft in the front-and-rear direction.

According to the invention, the wall portion to which the heat is transmitted from the stator can be cooled more efficiently by flow of running air generated by the wheel.

According to the power unit for the straddle-type electric vehicle of the present invention, the support portion may be formed into a cylindrical shape.

According to the invention, the surface area of the support portion can be set large, so that the radiation performance of the support portion is enhanced. Consequently, heat transmitted to the support portion from the controller can be cooled efficiently.

Further, the straddle-type electric vehicle has the power unit for the straddle-type electric vehicle as described above.

### Brief Description of the Drawings

Fig. 1 is a left side view of an electric motorcycle of a first embodiment of the present invention.
Fig. 2 is a left side view of the electric motor cycle without some components such as a body cover.
Fig. 3 is a right side view of a rear portion of the electric motorcycle.
Fig. 4 is an exploded perspective view of a power unit which shows the power unit from obliquely right-rear direction.
Fig. 5 is a right side view showing a state that some parts of the power unit is disassembled.
Fig. 6 is a partial sectional view of the power unit and a rear wheel which shows a state in which the power unit and the rear wheel are seen from the above.
Fig. 7 is a perspective view of a power unit according to a second embodiment of the invention.
Fig. 8 is a partial sectional view of the power unit and a rear wheel which shows a state in which the power unit and the rear wheel are seen from the above.
Fig. 9 is a right side view of a mounting wall on which a controller is mounted.

### Detailed Description of the preferred embodiments

### (First Embodiment)

Hereinafter, referring to the drawings, a first embodiment of the invention will be described specifically.

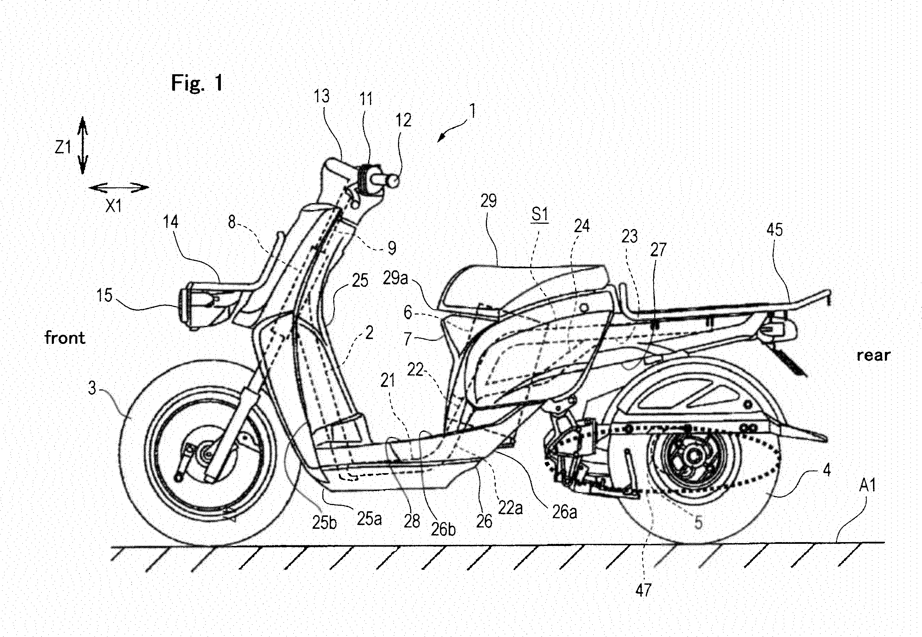

Fig. 1 is a left side view of an electric motorcycle 1 which is a straddle-type electric vehicle of a first embodiment of the invention. In this embodiment, the electric motorcycle 1 which is a motor scooter will be described as the straddle-type electric vehicle. The electric motorcycle 1 can be driven with luggage loaded at a front and rear portions thereof and is hence suitable for an application as a luggage-carrying vehicle.

When referred to in the following description, directions in relation to front and rear, top and bottom, and right and left are based on a point of view of a driver when the electric motorcycle 1 is at its basic posture in which the electric motorcycle 1 is running straight ahead on a horizontal plane and the driver faces the front of the electric motorcycle 1. Additionally, the configuration of the electric motorcycle 1 will be described based on a state of the electric motorcycle 1 in which the electric motorcycle 1 is erected with a front wheel 3 and a rear wheel 4 in contact with a road surface Al and no one riding thereon.

The electric motorcycle 1 includes a body frame 2, the front wheel 3, the rear wheel 4, an electric motor 5, a battery 6 and a body cover 7. The motor 5 is driven by electric power supplied from the battery 6. The rear wheel 4 is driven by an output of the electric motor 5. Hereinafter, an overall structure of the electric motorcycle 1 will be described sequentially from a front of a vehicle body.

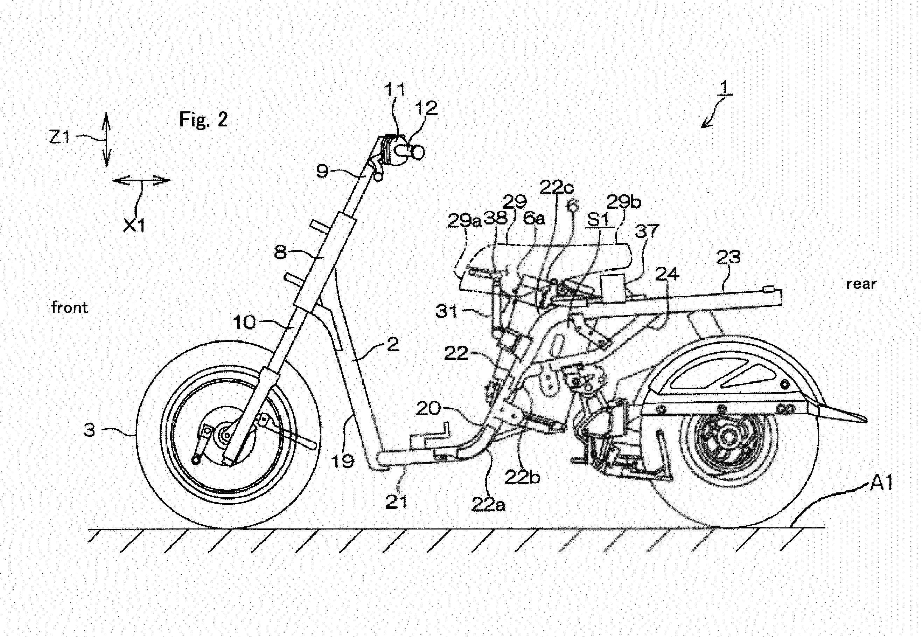

Fig. 2 is a left side view of the electric motorcycle 1 without some parts such as the body cover 7.
The electric motorcycle 1 has a head pipe 8 which is provided at an upper front portion of the electric motorcycle 1. A steering shaft 9 is inserted rotatably within the head pipe 8. A pair of left and right front forks 10 is mounted at a lower end portion of the steering shaft 9. The front wheel 3 is mounted on the front fork 10.

A handlebar 11 is mounted at an upper end portion of the steering shaft 9. The driver operates the handlebar 11 so as to turn the steering shaft 9, the front fork 10 and the front wheel 3 about an axis of the steering shaft 9.
A handgrip 12 is provided at each of left and right end portions of the handlebar 11 (only a left handgrip 12 is shown) . A right handgrip 12 makes up a throttle grip. The driver can control the output of the electric motor 5 by turning this throttle grip.

As shown in Fig. 1, a meter 13 is provided near the center of the handlebar 11. A luggage carrier 14 is provided below the meter 13. The luggage carrier 14 is fixed to the head pipe 8. The load of luggage placed on the luggage carrier 14 is applied mainly to the front wheel 3 via the head pipe 8 and the steering shaft 9. A headlamp 15 is fixed to a lower portion of the luggage carrier 14.

As shown in Fig. 2, the electric motorcycle 1 includes the body frame 2 which extends rearwards from the head pipe 8. The body frame 2 is formed by using steel pipe members. The body frame 2 includes a downtube 19 and a frame main body 20 which is provided at the rear of the downtube 19. The downtube 19 extends obliquely downwards to the rear from a lower portion of the head pipe 8. When seen from the side, the frame main body 20 extends rearwards from a lower end portion of the downtube 19, and an intermediate portion in a front-and-rear direction X1 of the vehicle is formed into an S shape.

The frame main body 20 is provided in pair on left- and right sides of a center line extending in the front-and-rear direction. The frame main body 20 includes a first frame portion 21, a second frame portion 22, a third frame portion 23, and a fourth frame portion 24. The first frame portion 21 extends substantially straight to the rear from the lower end portion of the downtube 19 and is inclined slightly upwards towards the rear,

When seen from the side, the second frame portion 22 is formed into an S shape. The second frame portion 22 includes a lower end portion 22a, an intermediate portion 22b and an upper end portion 22c. The lower end portion 22a of the second frame portion 22 is formed into a curved shape and is connected to a rear end portion of the first frame portion 21. The intermediate portion 22b of the second frame portion 22 extends straight obliquely upwards towards the rear. When seen from the side, an inclination angle of the intermediate portion 22b relative to the first frame portion 21 is, for example, about 45 degrees. The upper end portion 22c of the second frame portion 22 is formed into a curved shape and is connected to the intermediate portion 22b.

The third frame portion 23 extends straight from the upper end portion 22c and is inclined slightly upwards towards the rear. The fourth frame portion 24 extends to the rear from the intermediate portion 22b of the second frame portion 22, is curved obliquely upwards to the rear at an intermediate portion thereof, and is connected to an intermediate portion of the third frame 23.

As shown in Fig. 1, the electric motorcycle 1 includes the body cover 7 which is mounted on the body frame 2. The body cover 7 includes a front cover 25 which covers the head pipe 8, a lower cover 26 which extends to the rear from a lower portion of the front cover 25, and a rear cover 27 which is provided at the rear of the front cover 25.

The front cover 25 surrounds part of the steering shaft 9 and the head pipe 8 and also surrounds the downtube 19. The lower cover 26 extends to the rear from a lower portion 25a of the front cover 25 for covering the first frame portion 21 and a lower end portion 22a of the second frame portion 22 from below and both left- and right sides thereof. A footrest portion 28 is provided at an upper end portion of the lower cover 26. The footrest portion 28 is provided so that the feet of the driver are rested thereon and is formed substantially flat.

The rear cover 27 is formed into a shape which extends to the rear while being inclined upwards from a rear portion 26a of the lower cover 26. The rear cover 27 covers an area of the second frame portion 22 which excludes the lower end portion 22a from the front and left side and right-side thereof. In addition, the rear cover 27 also covers the third frame portion 23 and the fourth frame portion 24 from the front and left side and right side thereof.

A seat 29 is provided above the rear cover 27. The feet of the driver sitting on the seat 29 are rested on the footrest portion 28 while the electric motorcycle 1 is running. In the front-and-rear direction X1, the footrest portion 28 is provided between a rear surface 25b of the front cover 25 and a front end portion 29a of the seat 29. In addition, the seat 29 is provided above the second frame portion 22, is provided above part of the third frame portion 23 and is provided above part of the fourth frame portion 24. A space surrounded by the seat 29 and the rear cover 27 defines an accommodating space S1.

As shown in Fig. 2, the seat 29 is supported by a first bracket 31 and a support bracket 37. The first bracket 31 is mounted at the intermediate portion 22b of the second frame 22. The first bracket 31 extends upwards from the intermediate portion 22b.

A hinge portion 38 is provided at an upper end portion of the first bracket 31. The seat 29 is supported on the first bracket 31 via the hinge portion 38. The first bracket 31 supports the seat 29 from therebelow. The seat 29 can rotate about the hinge portion 38. The accommodating space S1 can be opened upwards by rotating the seat 29 about the hinge portion 38. The seat 29 may be fixed directly to the first bracket 31 by omitting the hinge portion 38.

A rear portion 29b of the seat 29 is supported by the support bracket 37. The support bracket 37 is fixed to the third frame portion 23 of the body frame 2 and has a shape which projects upwards from the third frame portion 23.

The battery 6, which functions as a power supply for the electric motor 5, is provided in the accommodating space S1 below the seat 29. The battery 6 is provided between the pair of left and right second frame portions 22. The battery 6 is a rechargeable battery which can be recharged. When seen from the side, the battery 6 has a substantially rectangular shape in which a length (a height) in a top-to-bottom direction Z1 of the vehicle is made longer than a length (a width) in the front-and-rear direction X1. The battery 6 is provided in such a posture that the battery 6 is inclined so as to be positioned higher at the rear than at the front thereof and is supported on the body frame 2. An upper portion 6a of the battery 6 is provided between the first bracket 31 and the support bracket 37.

As shown in Fig. 1, a luggage carrier 45 is provided at the rear of the seat 29. The luggage carrier 45 is provided above the third frame portion 23 and is supported on the third frame portion 23. The luggage can be placed on the luggage carrier 45. The load of the luggage placed on the luggage carrier 45 is received mainly by the rear wheel 4.

In this way, the luggage carrier 14, the battery 6, which is the heavy part, and the luggage carrier 45 are aligned in the front-and-rear direction X1. Consequently, when the luggage are placed on the luggage carrier 14 and the luggage carrier 45, the loads can evenly be applied to the electric motorcycle 1 in a well balanced fashion in the front-and-rear direction X1. Consequently, even with the luggage placed on the luggage carrier 14 and the luggage carrier 45, the electric motorcycle 1 can be maintained in a highly steerable condition.

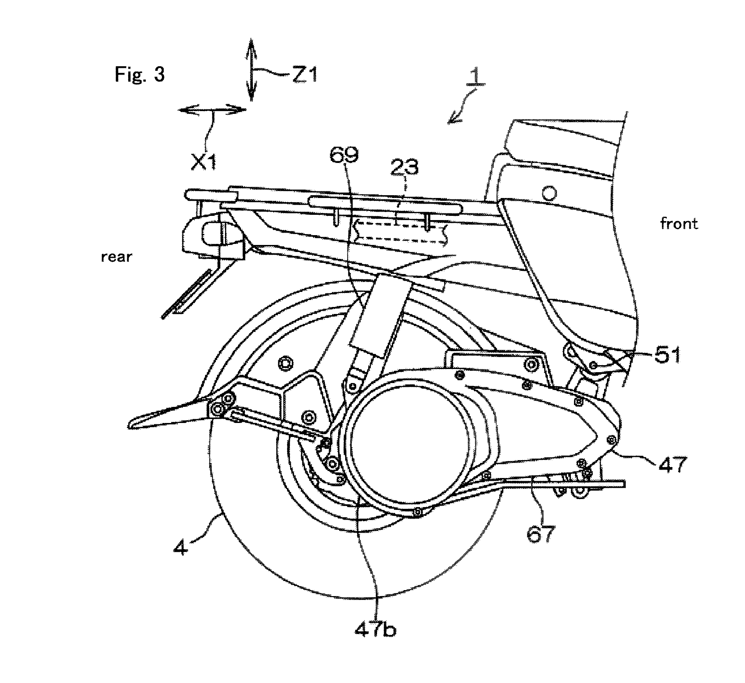

Fig. 3 is a right side view of a rear portion of the electric motorcycle 1. The electric motorcycle 1 includes a power unit 47 which is supported on the body frame 2 so as to swing relative thereto by a pivot shaft 51. The power unit 47 is provided on a right side of the rear wheel 4. A rear portion 47b of the power unit 47 is connected to the third frame portion 23 via a shock absorber 69. Accordingly, shock generated when the power unit 47 swings is attenuated and absorbed by the shock absorber 69. When seen from the side, the power unit 47 is provided below the third frame portion 23. In a motor case 67 of the power unit 47, when seen from the side, length in the front-and-rear direction X1 is larger than length in the top-to-bottom direction Z1.

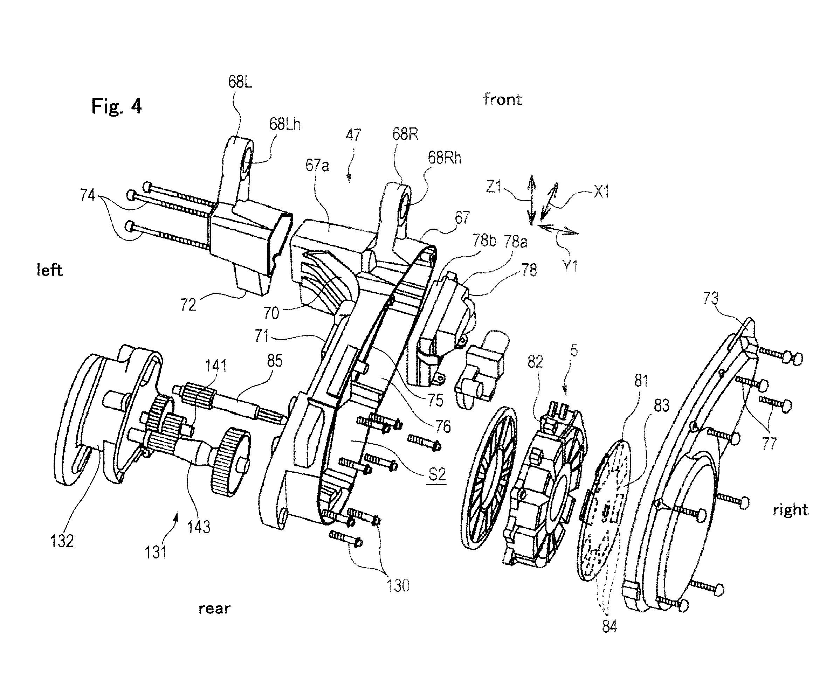

Fig. 4 is an exploded perspective view of the power unit 47 and shows a state in which the power unit 47 is seen obliquely right-rear direction. The motor case 67 of the power unit 47 includes a motor case main body (a case main body portion) 71, a support portion 67a that is formed at a front end of the motor case main body 71 so as to extend in a left-and-right direction Y1, a lid 73 which covers a right side surface of the motor case main body 71. The motor case main body 71 is formed into a shape in which the motor case main body 71 extends to the rear from a right portion of the support portion 67a. Ribs 70 are provided on a side of the support portion 67a which faces the rear wheel 4 so as to extend towards the rear wheel 4. The ribs 70 are provided so as to extend from the support portion 67a to reach a mounting wall (a wall portion) 75.

A connecting member 72 is provided to the left of the support portion 67a. The connecting member 72 is fixed to the support portion 67a of the motor case main body 71 by using a plurality of screw members 74. A mounting piece 68L is formed integrally on the connecting member 72. A mounting piece 68R is formed integrally on the support portion 67a of the motor case main body 71. Insertion holes 68Lh, 68Rh are formed in the mounting pieces 68L, 68R, respectively. The pivot shaft 51 is inserted through these insertion holes 68Lh, 68Rh, whereby the power unit 47 is supported on the body frame 2 so as to swing on an axis of the pivot shaft 51 as the center of swing.

The motor case main body 71 includes the mounting wall 75 which is provided on a side of the rear wheel 4 so as to extend in the front-and-rear direction X1 and a cylindrical circumferential wall 76 which extends rightwards from a circumferential edge portion of the mounting wall 75. A motor accommodating space S2 which can accommodate therein the electric motor 5 is defined by the mounting wall 75 and the circumferential wall 76. The support portion 67a is provided on a left side of a front portion of the mounting wall 75.

The lid 73 is provided at the right of the circumferential wall 76 and covers the motor accommodating space S2. The lid 73 is fixed to a right end face of the circumferential wall 76 by using a plurality of screw members 77. A gasket, not shown, is provided between the circumferential wall 76 and the lid 73.
The power unit 47 includes a controller 78 and the electric motor 5 which are provided within the motor accommodating space S2.

The controller 78 has a case 78a which is formed by using a synthetic resin and an aluminum substrate 78b which is made up of a flat aluminum plate. A driver circuit including an inverter circuit and a control circuit for controlling the driver circuit are provided in an interior of the controller 78 which is surrounded by the case 78a and the aluminum substrate 78b. The inverter circuit converts direct current from the battery 6 (refer to Fig. 2) into alternating current and supplies the alternating current to the electric motor 5.

The control circuit includes a CPU, a RAM and a ROM and controls the inverter circuit so that the electric motor 5 generates an output corresponding to the operation amount of the throttle operated by the driver. Power semiconductor elements, that have high heat calorific value and which make up the inverter circuits and the like, are attached directly to the aluminum substrate 78b. Accordingly, the heat from the power semiconductor elements is transmitted to the aluminum substrate 78b efficiently.

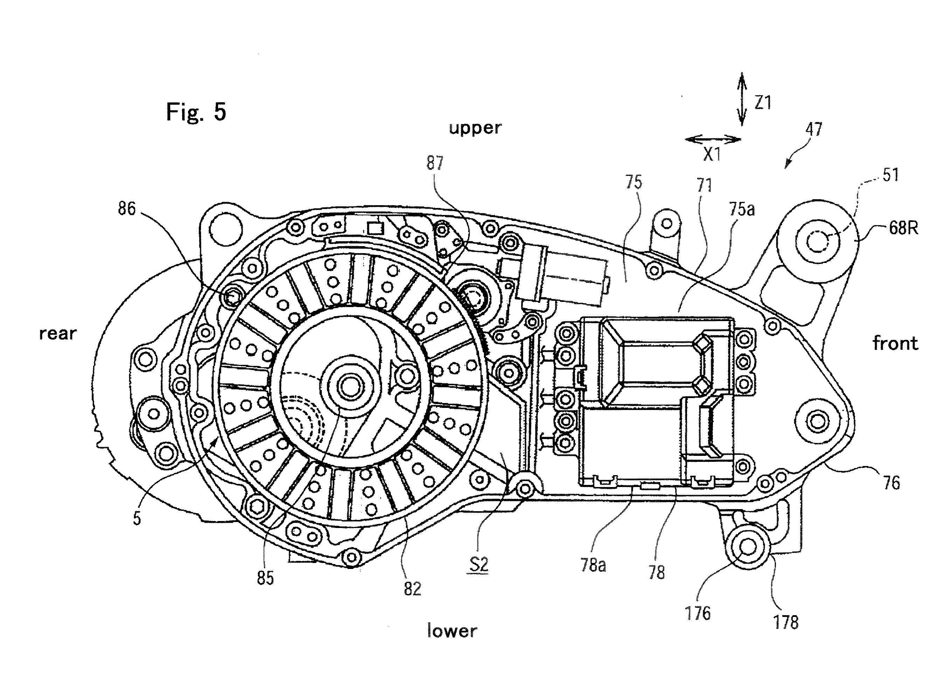

Fig. 5 is a right side view showing a state in which the power unit 47 is partially exploded. The case 78a and the aluminum substrate 78b of the controller 78 are formed into a substantially rectangular shape when seen from the side. The controller 78 is provided at a front portion of the motor accommodating space S2.
Namely, the controller 78 is provided in the position closer to the support portion 67a than the electric motor 5. The mounting holes 68L, 68R, through which the pivot shaft 51 constituting the center of swing of the power unit 47 which is swung when the vehicle body vibrates, are provided in the support portion 67a. Accordingly, when the power unit 47 swings on the pivot shaft 51, the acceleration acting on the controller 78 can be decreased. Consequently, an external force acting on the controller 78 becomes small, thereby making it possible to enhance the durability of the controller 78.

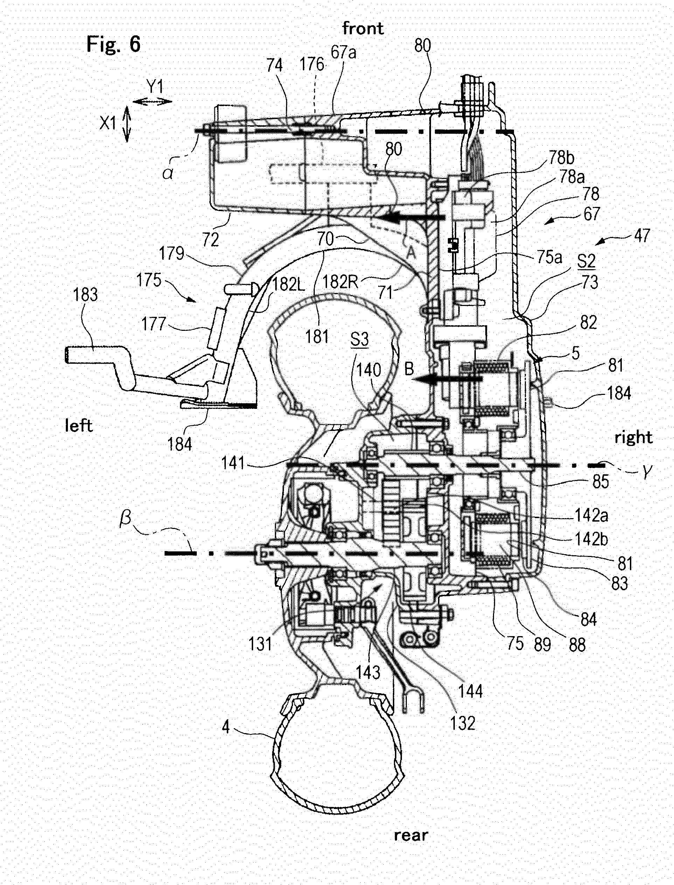

Fig. 6 is a sectional view of the power unit 47 and the rear wheel 4 and shows a state in which the power unit 47 and the rear wheel are seen from the above.
The support portion 67a is formed into a cylindrical shape, and the connecting member 72, which is fixed to this support portion 67a, is also formed into cylindrical shape. The plurality of ribs 70 are formed on the external surface of the support portion 67a. The support portion 67a has an air flow hole 80, which penetrates therethrough in the front-and-rear direction X1, in a side which lies to face the mounting wall 75 or a root side thereof.

The controller 78 is fixed to a mounting surface 75a which is situated on an area of the mounting wall 75 where the support portion 67a including the ribs 70 is provided. More specifically, the controller 78 is fixed to a right side of the mounting wall 75 and in the same position as the position of the ribs 70 in the front-and-rear direction. The mounting surface 75a of the mounting wall 75 to which the controller 78 is fixed is formed into a flat smooth surface, and the aluminum substrate 78b of the controller 78 is brought into surface contact with this mounting surface 75a. Accordingly, the heat transmitted from the power semiconductor elements to the aluminum substrate 78b is transmitted to the motor case main body 71 efficiently.

The support portion 67a is a portion where the power unit 47 is supported on the body frame 2. In order to ensure the strength required to support the power unit 47 on the body frame 2, the support portion 67a is formed to have heavier weight and larger volume than those of the other portions. The controller 78 is fixed to the mounting surface 75a which is the right side surface of the mounting wall 75 and in the same position as that of at least part (the ribs 70) of the support portion 67a in the front-and-rear direction. Consequently, the heat of the controller 78 is transmitted efficiently towards the support portion 67a having the large heat capacity via the area of the mounting wall 75 where the support portion 67a is provided as indicated by an arrow A in Fig. 6.

The support portion 67a has the cylindrical shape and has large surface area. By this configuration, the radiation performance of the support portion 67a is enhanced.

In addition, the plurality of ribs 70 are formed so as to straddle the external surface of the support portion 67a and an outer circumferential surface of the mounting wall 75. These ribs 70 extend along the front-and-rear direction X1. Surface areas of an outer circumferential surface of the support portion 67a and the outer circumferential surface of the mounting wall 75 are increased further. Accordingly, the radiation performance of the support portion 67a and the mounting wall 75 are enhanced further. Consequently, heat generated in the controller 78 can be radiated efficiently from the mounting wall 75 and the support portion 67a.

Further, the support portion 67a has the air flow hole 80, which penetrates the support portion 67a in the front-and-rear direction X1, in the side facing the mounting wall 75 which is the root side thereof. Consequently, when the vehicle is running, outside air is allowed to pass through an interior of the support portion 67a via the air flow hole 80. Namely, an inner wall of the support portion 67a is also cooled by the air flow hole 80, whereby the radiation effect of the support portion 67a is enhanced further. Accordingly, the cooling efficiency of the controller 78 is improved.

The electric motor 5 is provided at the rear of the controller 78. The length (height) of the motor accommodating space S2 in the top-to-bottom direction Z1 is made longer at the area where the electric motor 5 is provided than the area where the controller 78 is provided. This enables the installation of the electric motor 5 which is large in size within the power unit 47 while preventing the enlargement of the whole of the power unit 47.

As shown in Figs. 4 and 6, the electric motor 5 includes a rotor (a rotating element) 81 and a stator 82 which oppositely faces the rotor 81. In this embodiment, the electric motor 5 is an 8-pole, 12-slot brushless motor. The electric motor 5 is an axial gap motor in which a gap is provided in an axial direction (the left-and-right direction Y1) of the electric motor 5 between the rotor 81 and the stator 82. The rotor 81 is provided on right side of the stator 82.

The rotor 81 is provided adjacent to the lid 73 and is fixed to a motor shaft (an output shaft) 85 of the electric motor 5. The rotor 81 includes a circular disk-shaped rotor core 83 and rotor magnets 84 which are fixed to the rotor core 83. The rotor core 83 is connected to a right end portion of the motor shaft 85 through spline connection or the like and rotates together with the motor shaft 85.

The rotor magnets 84 are provided in a plural number and are provided at equal intervals along a circumferential direction of the rotor core 83. These rotor magnets 84 are provided along the circumferential direction of the rotor core 83 so that N poles and S poles alternate with each other. In this embodiment, eight rotor magnets 84 are provided.

The stator 82 is formed into cylindrical shape and surrounds the motor shaft 85. The stator 82 includes a plurality of coils 89. The coils 89 generate magnetic fields by supplying electric power from the controller 78 to the coils 89. Accordingly, the rotor 81 including the rotor magnets 84 is rotated, whereby the motor shaft 85 is rotated in turn.

The stator 82 is provided on left side of the rotor 81. This stator 82 is mounted on the right side surface of the mounting wall 75 of the motor case main body 71 with stator mounting bolts 86 (refer to Fig. 5). Additionally, the stator 82 is fixed further rearwards than the controller 78 in the front-and-rear direction. Accordingly, heat generated in the stator 82 is transmitted to the mounting wall 75 efficiently. In addition, the front side of the stator 82 is mounted in a position on the mounting wall 75 which faces the rear wheel 4. In other words, the stator 82 is fixed on the right side surface of the mounting wall 75 within an area which is the same position as the rear wheel 4 in the front-and-rear direction. The position on the mounting wall 75 which faces the rear wheel 4 is cooled by air flow generated by the rear wall 4 when the vehicle is running. By providing the stator 82 in such a position, heat from the stator 82 can be radiated efficiently as indicated by an arrow B in Fig. 6. Consequently, the cooling efficiency of the stator 82 is improved.

As shown in Fig. 6, the power unit 47 includes a speed reduction mechanism (a transmission mechanism) 131 which transmits the output of the electric motor 5 to the rear wheel 4. The speed reduction mechanism 131 reduces the rotation speed of the motor shaft 85 of the electric motor 5 to thereby increase the torque from the motor shaft 85 for transmission to the rear wheel 4.

The speed reduction mechanism 131 is accommodated in a gear case 132 which is fixed to the motor case 67 with screw members 130. The speed reduction mechanism 131 is of a two-speed type and is configured to have three shafts. The speed reduction mechanism 131 includes an input gear 140, an intermediate shaft 141 and an output gear 144.

The input gear 140 is provided integrally on the motor shaft 85 and rotates together with the motor shaft 85. Additionally, the output gear 144 is provided integrally on an axle shaft 143 of the rear wheel 4 and rotates together with the axle shaft 143. The intermediate shaft 141 is provided between the motor shaft 85 and the axle shaft 143. This intermediate shaft 141 is supported rotatably on the gear case 132 and the mounting wall 75.

An axle shaft receiving portion 110 is formed on an opposite side of the mounting wall 75 to the side on which the stator 82 is mounted. A bearing 108, which supports rotatably one end of the axle shaft 143 of the rear wheel 4, is mounted on this axle shaft receiving portion 110.

A first intermediate gear 142a and a second intermediate gear 142b are fitted on an outer circumference of the intermediate shaft 141 so as to be fixed thereto. The first intermediate gear 142a meshes with the input gear 140, and the second intermediate gear 142b meshes with the output gear 144. Thus, the output of the motor shaft 85 is transmitted to the axle shaft 143 of the rear wheel 4 via the intermediate shaft 141.

In the power unit 47 as described above, as shown in Figs. 5, 6, the motor shaft 85 of the electric motor 5 is provided between the controller 78 and the axle shaft 143 in the front-and-rear direction. In other words, the motor shaft 85 is provided on a side which lies closer to the support portion 67a than the axle shaft receiving portion 110 when seen from the side. Thus, the electric motor 5 is provided in the position which lies closer to the support portion 67 which is supported on the body frame 2 than the axle shaft 143.

As shown in Fig. 5, a stand mounting piece 178 is formed at a lower portion of a front end of the support portion 67a. As shown in Fig. 6, a stand unit 175 is mounted on the stand mounting piece 178. The stand unit 175 can support the electric motorcycle 1 and is used to park the electric motorcycle 1. This stand unit 175 supports the electric motorcycle 1 with the rear wheel 4 apart from the road surface A1.

The stand unit 175 includes a pivot shaft 176 which is connected to the power unit 47 and a stand member 177 which is connected to the pivot shaft 176 so as to rotate on the pivot shaft 176. The stand member 177 can be displaced between a spaced apart position where the stand member 177 is spaced apart from the road surface A1 and a ground contact position where the stand member 177 is in contact with the road surface A1.

The pivot shaft 176 is inserted through the stand mounting piece 178 which is formed at a lower end of the support portion 67a of the motor case 67 and extends in the left-and-right direction Y1. The stand member 177 includes a U-shaped portion 179 which is fixed to the pivot shaft 176.

When seen from the above, the U-shaped portion 179 is provided so as to surround a front portion of the rear wheel 4 from the front side, left side and right side thereof. The U-shaped portion 179 includes a first portion 181 which is connected to the pivot shaft 176 and a pair of second portions 182L, 182R which branch off the first portion 181 in the left-and-right direction Y1.

The second portion 182L extends rearwardly leftwards from the first portion 181. A foot catching portion 183 is provided at a distal end portion of the second portion 182L. The foot of the driver is placed on the foot catching portion 183 When the driver operates the stand member 177. The foot catching portion 183 is formed into a rod-like shape which extends leftwards from the distal end portion of the second portion 182L and is provided on a left side of the rear wheel 4.

A ground contact member 184 is provided at the distal end portion of the second portion 182L. The ground contact member 184 is formed by pressing a metallic plate which is a separate member from the second portion 182L and is fixed to the second portion 182L. The second portion 182 extends rearwardly rightwards from the first portion 181. The second portion 182R has a shape which is laterally symmetrical with the second portion 182L except for a feature that no foot catching portion 183 is provided thereon.

When the driver displaces the stand member 177 from the spaced apart position to the ground contact position, firstly, the driver gets off the electric motorcycle 1 and places the toe of the foot on the foot catching portion 183. Next, the driver depresses the foot catching portion 183 downwards so as to rotate the stand member 177 about the pivot shaft 176. Accordingly, the stand member 177 is displaced to the ground contact position. The ground contact member 184 of the stand member 177 which is displaced to the ground contact position is now in contact with the road surface A1. As this occurs, the rear wheel 4 is spaced apart from the road surface A1.

Thus, as has been described heretofore, according to this embodiment, the controller 78 is fixed to the right side of the mounting wall 75 in the same position as that of at least part of the support portion 67a in the front-and-rear direction. Accordingly, the heat generated in the controller 78 can be released to the support portion 67a having the large heat capacity via the mounting wall 75 efficiently. Consequently, the cooling performance of the controller 78 can be enhanced.

Further, by fixing the controller 78 at least in the same position as that of the support portion 67a, the electric motor 5 which is connected to the controller 78 is provided in the position lying close to the support portion 67a. Accordingly, the motor shaft 85 of the electric motor 5 can be provided between the controller 78 and the axle shaft 143 in the front-and-rear direction. In other words, as shown in Fig. 6, a rotation center γ of the electric motor 5 is provided in a position which lies closer to a rotation center α of the pivot shaft 51 which is inserted through the mounting pieces 68L, 68R than a rotation center β of the axle shaft 143. On the support portion 67a, there are provided the mounting pieces 68L, 68R, through which the pivot shaft 51 constituting the center of swing of the power unit 47 swung when the vehicle vibrates is inserted. Consequently, since the electric motor 5, which is the heavy part, can be provided so as to lie close to the center of swing, the inertia moment of the power unit 47 can be decreased. Consequently, the following capability of the power unit 47 relative to the vehicle body which vibrates while running is enhanced, the riding comfort of the electric motorcycle 1 being thereby improved.

In the configuration described in Patent Document 1, fins on the controller are exposed from a hole in a case which is formed in a position facing the wheel, and the radiation effect of the fins is enhanced by the air flow generated by the wheel. In this construction, however, the watertightness and rigidity of the case are reduced by forming the hole in the case. Moreover, mud scattered from the wheel while the vehicle is running adheres to the fins, calling for the reduction in radiation performance of the controller.

To the contrary, in the embodiment, the high cooling performance of the controller can be made compatible with the superior riding comfort while eliminating the reduction in watertightness and rigidity of the case and the reduction in radiation performance of the controller.

The inventors have studied to improve the configuration described in Patent Document 1 by eliminating the drawback that the adhesion of mud to the fins deteriorates the radiation performance of the controller. Then, the inventors have come to be aware that the support portion 67 which supports the power unit 47 on the body frame 2 is heavy in weight and large in volume because the strength thereof needs to be ensured and has the large heat capacity. Then, the inventors have come to think that the problem inherent in the configuration in Patent Document 1 could be solved by releasing the heat of the controller 78 to the support portion 67.

Further, the inventors have studied to change the positions of the other members in association with the change in disposition of the controller 78. Here, in addition to the issue of radiation, the other characteristics of the power unit 47 have also been studied. Then, the inventors have paid attention to the electric motor 5 that is the heavy part and which affects largely the vibration of the power unit 47. In the event that the electric motor 5 can be shifted towards the support portion 67, the inertia moment of the power unit 47 can be reduced. The inventors have also come to be aware that the riding comfort of the electric motorcycle 1 can be enhanced accordingly.

Namely, the inventors have come to be aware that studying the cooling capability of the controller 78 as done in Patent Document 1 and also the other characteristics thereof can enhance the riding comfort. In this way, according to the embodiment of the invention, the electric motorcycle 1 is provided which is superior both in cooling capability of the controller 78 and riding comfort.

### (Second Embodiment)

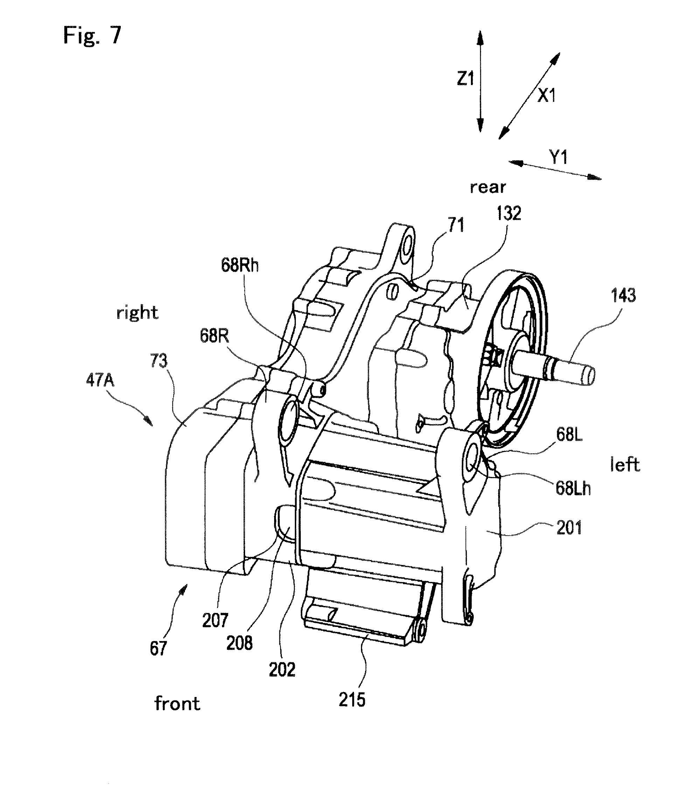

Fig. 7 is a perspective view of a power unit according to a second embodiment of the invention. Hereinafter, features which are different from the first embodiment will mainly be described. Like reference numerals will be given to like configurations to those of the embodiment 1 in the figures, and the description thereof will be omitted.

A power unit 47A of the second embodiment differs from the power unit 47 of the first embodiment and includes a support portion 201 which is a separate member from a motor case main body 71. This support portion 201 is joined to a joining portion 202 on a front side of the power unit 47A.

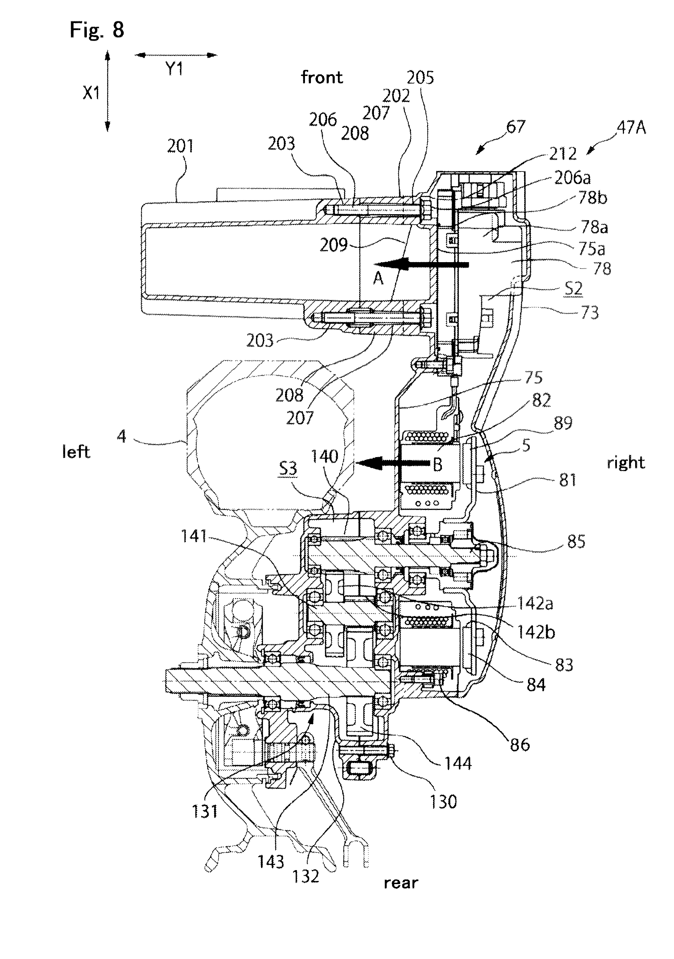

Fig. 8 is a sectional view of the power unit 47A and a rear wheel 4 and shows a state in which the power unit 47A and the rear wheel 4 are seen from the above. The support portion 201 is also formed into a cylindrical shape as in the first embodiment. A plurality of screw threaded holes 203 are formed in an end face of the support portion 201 which lies on a side where the support portion 201 is joined to the joining portion 202. A plurality of insertion holes 205 are formed in the joining portion 202. Screw members 206 are inserted through the insertion holes 205 from an opposite side to the support portion 201. These screw members 206 are screwed into the screw threaded holes 203 in the support portion 201. Accordingly, the support portion 201 is fixed to a mounting wall 75 of the motor case main body 71.

Notches 207 are formed at front side and rear side of the joining portion 202 in a boundary with the support portion 201. By joining the support portion 201 to the joining portion 202, opening portions of the notches 207 on a side facing the support portion 201 are closed. Accordingly, an air flow hole 208 is formed which penetrates in a front-and-rear direction X1. Consequently, in the support portion 201, outside air is allowed to pass through an interior of the air flow hole 208 which penetrates in the front-and-rear direction X1 while an electric motor cycle 1 is running. Namely, air is sent into an interior of the support portion 201 by the air flow hole 208, the radiation effect of the support portion 201 being thereby enhanced further. Accordingly, the cooling efficiency of the controller 78 is further improved.

A rib 209 is formed in an interior of a hollow space defined by joining the support portion 201 to the joining portion 202. The rib 209 extends along the front-and-rear direction X1. Accordingly, outside air which is introduced into the hollow space from the air flow hole 208 is allowed to pass along the rib 209. By the passage of air in this way, heat transmitted from a controller 78 is radiated well.

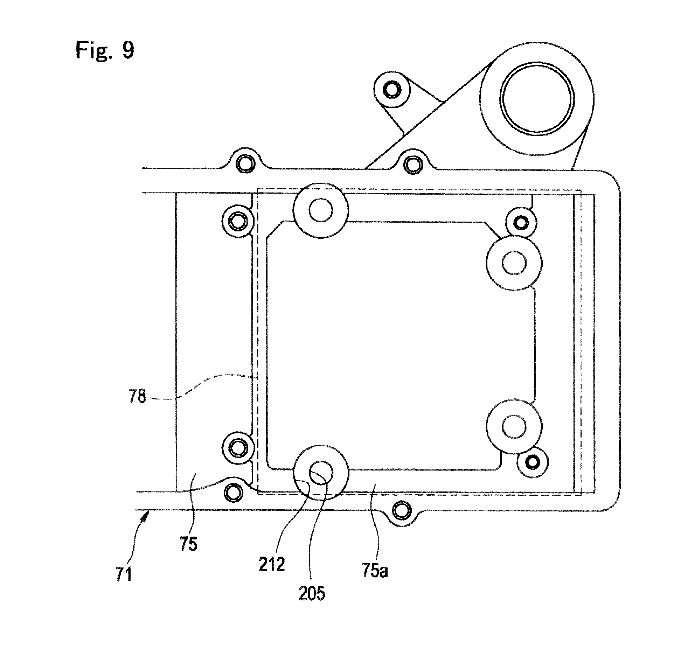

Fig. 9 is a right side view of the mounting wall 75 on which the controller 78 is mounted. The side of the mounting wall 75 which is opposite to the side where the support portion 201 is fixed is a mounting surface 75a for the controller 78. The controller 78 is brought into surface contact with the mounting surface 75a of the mounting wall 75 and is fixed thereto. A fastening position of the screw members 206 with which the support portion 201 is joined to the joining portion 202 is an inner side of the area (the area indicated by a broken line in the figure) where the controller 78 is mounted.

Counterbores 212 are formed in the area of the mounting surface 75a of the mounting wall 75 where the controller 78 is mounted. The Counterbores 212 are provided in positions which correspond to the insertion holes 205. Head portions 206a of the screw members 206 are accommodated in the Counterbores 212. Accordingly, the head portions 206a of the screw members 206 do not project from the mounting surface 75a in any case. Consequently, the controller 78 is brought into surface contact with the mounting surface 75a of the mounting wall 75 and is fixed thereto without interfering with the head portions 206a of the screw members 206.

In addition, as shown in Fig. 7, a stand mounting piece 215 is formed at a lower portion of a front end of the support portion 201. In the stand mounting piece 215, a stand unit 175 is supported by a pivot shaft 176. In this way, the stand mounting piece 215 is formed on the support portion 201 which is separate from the motor case main body 71. Accordingly, the stand mounting piece 215 can be prepared easily. Additionally, the dimensional accuracy of the stand mounting piece 215 can be increased.

As well as the first embodiment, in the second embodiment, the controller 78 is fixed to the right side of the mounting wall 75 in the same position as that of the support portion 201 having large heat capacity. Accordingly, heat generated in the controller 78 can be released to the support portion 201 via the mounting wall 75 efficiently. Consequently, the cooling capability of the controller 78 can be enhanced.

Further, by fixing the controller 78 in the same position as that of the support portion 201, an electric motor 5 which is connected to the controller 78 can be made to lie close to the support portion 201. On the support portion 201, there are formed the mounting pieces 68L, 68R through which a pivot shaft 51 constituting the center of swing of the power unit 47A swung when the vehicle body vibrates, is inserted. Because of this, by causing the electric motor 5 which is a heavy part to lie close to the support portion 201, the inertia moment of the power unit 47A can be reduced. Consequently, the following capability of the power unit relative to the vehicle body which vibrates while the electric motorcycle is running can be enhanced to thereby increase the riding comfort of the electric motorcycle. Namely, according to the electric motorcycle according to this embodiment, the high cooling performance of the controller 78 can be made compatible with the superior riding comfort.

In the embodiments, while the invention is described as being applied to the electric motorcycle, the invention may be applied to any straddle-type vehicles including an electric tricycle in addition to the electric motorcycle.

In addition, in the embodiments, the configuration is described in which the support portion 67, 67A is provided at the front side of the rear wheel 4, the controller is provided in the same position as that of at least part of the support portion 67, 67A, and the electric motor 5 is provided rearwards of the controller 78. However, the invention is not limited thereto.
For example, a configuration may be adopted in which a support portion is provided at a rear end of the front wheel, the controller is provided in the same position as that of at least part of this support portion, and the electric motor is provided forwards of the controller. In this case, too, the electric motor can be provided so as to lie close to a center of swing of the power unit which is situated at the rear side of the front wheel. Accordingly, both the cooling capability of the controller and the riding comfort can be increased.
Alternatively, a configuration may be adopted in which a support portion is provided at rear side of the rear wheel, the controller is provided in the same position as that of at least part of the support portion, and the electric motor is provided forwards of the controller. In this case, too, the electric motor can be provided so as to lie close to a center of swing of the power unit which is situated at the rear side of the rear wheel. In addition, heat from the controller can be released to the support portion. Accordingly, both the cooling capability of the controller and the riding comfort can be increased.

In addition, various design changes can be made without departing from the scope of matters described in the scope of inventions to be claimed.
This patent application is based on Japanese Patent Application (No. 2010-260634) filed on November 22, 2010, the contents of which are incorporated herein by reference. Description of Reference Numerals and Signs

### Description of Reference Numerals

- 1: electric motorcycle (straddle-type electric vehicle)
- 2: body frame (vehicle body)
- 4: rear wheel (wheel)
- 5: electric motor
- 67: motor case (case)
- 67a, 201: support portion
- 68L, 68R: mounting piece
- 71: motor case main body (case main body portion)
- 74, 74A: power unit
- 75: mounting wall
- 78: controller
- 82: stator
- 85: output shaft
- 110: axle shaft receiving portion
- 131: speed reduction mechanism
- 143: axle shaft

## Claims

1. A power unit for a straddle-type electric vehicle comprising:
an electric motor to which receives supply of electric power and which drives to rotate an output shaft;
a transmission mechanism which transmits rotational force of the output shaft of the electric motor to an axle shaft;
a controller which controls the supply of electric power to the electric motor; and
a case which accommodates the electric motor, the transmission mechanism and the controller and has a support portion which is supported so as to swing relative to a vehicle body,
wherein the case includes
a wall portion which extends in a front-and-rear direction,
the support portion is formed so as to be provided on one side surface of a right side surface or a left side surface of one side of front-and-rear direction of the wall portion,
the transmission mechanism is provided so that the axle shaft is provided on the one side surface of the right side surface or the left side surface of the other side of the front-and-rear direction of the wall portion,
the controller is fixed on a position which is the other side surface of the right side surface or the left side surface of the wall portion and which is the same position as at least part of the support portion in the front-and-rear direction
the electric motor is provided so that the output shaft is provided between the controller and the axle shaft in the front-to-right direction of the wall portion.

2. The power unit for a straddle-type electric vehicle as set forth in Claim 1, wherein
the electric motor includes a stator and a rotor which oppositely faces the stator, and
the stator is fixed on the other side surface of the right side surface or the left side surface and rear-side of the controller in the front-and-rear direction.

3. The power unit for a straddle-type electric vehicle as set forth in Claim 2, wherein
the stator is fixed to the other of the right side or the left side of the wall portion within an area which is situated in the same position as that of a wheel which is mounted on the axle shaft in the front-and-rear direction.

4. The power unit for a straddle-type electric vehicle as set forth in one of Claims 1 to 3, wherein
the support portion is formed into a cylindrical shape.

5. A straddle-type electric vehicle, comprising:
the power unit for a straddle-type electric vehicle as set forth in one of Claims 1 to 4.
